# EUROPEAN PATENT SPECIFICATION

(11) **EP 0 680 674 B1**
(45) Date of publication and mention of the grant of the patent: **05.02.2003**
(21) Application number: 95900783.2
(22) Date of filing: 21.11.1994
(51) Int. Cl.: H04B 7/005

(54) **A METHOD FOR ADJUSTING TRANSMISSION POWER, AND A BASE STATION**
VERFAHREN ZUR SENDELEISTUNGSREGELUNG UND BASISSTATION
PROCEDE D'ADAPTATION DE LA PUISSANCE D'EMISSION, ET STATION DE BASE

(30) Priority: 22.11.1993 FI 935179
(43) Date of publication of application: 08.11.1995
(73) Proprietor: Nokia Corporation, 02150 Espoo (FI)
(72) Inventor: SUONVIERI, Jukka, FIN-90240 Oulu (FI)
(74) Representative: Brockman, Pertti Erik
(86) International application number: FI9400521
(87) International publication number: WO95015037

(56) References cited:
- EP-A- 0 420 505
- EP-A- 0 523 718
- PATENT ABSTRACTS OF JAPAN, Vol. 17, No. 661, E-1471; & JP,A,05 218 916 (NEC ENG LTD), 27 August 1993.

## Description

The present invention relates to a method of adjusting transmission power in a base station of a cellular radio network, in each cell of which is determined a desired power level transmitted by the antenna of the base station.

Network planning is an essential part of the planning of a cellular radio network construction. The aim is to locate the base stations of a system in such a manner that the desired coverage can be produced at the lowest possible cost. Each base station comprises its own service area, i.e. its cell, which is dimensioned in accordance with the transmission power and the range of audibility of the base station.

When the system is being planned, the location of the base station, the location of the antenna, and other base station configuration, such as the type of antenna and antenna cable, are selected. These things affect the radiation power transmitted by the antenna, as well as the coverage area of the base station, the coverage area being thus dependent on the transmission power used by the base station.

When the system is in use, it may be necessary to change the configuration of the base station in some way either due to the breakage of a component or for some other reason. The type of antenna may change, it may be necessary to move the transmitter to another place, whereby the length of the antenna cable (and thus also the attenuation due to it) changes. The RX/TX combiner provided in connection with the transmitter can also be changed for instance from a tunable combiner to a wideband one, whereby the attenuation due to it changes.

The thing in common with all of the above-mentioned changes is that due to a change in the configuration, the power level transmitted by the antenna changes. This has a direct effect on the range of audibility of the base station. If the configuration changes are in no way compensated for, the power measured from the transmitting antenna can drop for instance 50%, which causes the range of audibility of the cell to diminish by 10 - 20%, which is equivalent to 20 - 30% of the coverage area.

In solutions according to prior art, efforts have been made to compensate for the change in transmission power by changing the parameters of the upper level of the cellular network, and by making changes in the network planning. These types of changes are however difficult to carry out, are susceptible to errors, and often lead to nonstandard solutions.

In patent publication EP 0523718A a method for adjust transmission power of a base station is presented. In the method the adjusting of transmission power is performed in response to the changes in temperature. The purpose of method is to keep the transmission power the same regardless of the temperature.

The object of the present invention is thus to obviate the disadvantages of the earlier solutions by significantly facilitating the compensation of the change in the configuration by maintaining the transmission power levels of the antenna stable, whereby there is no need to carry out changes in the network planning and the upper levels of the systems.

This is achieved with the method described in the introduction, said method being characterized in that when a combiner, antenna cable or type of antenna of the base station is changed in such a manner that the power transmitted by the antenna deviates from the desired power level, the transmission power of the base station is increased or decreased until the desired power level is reached again.

The invention also relates to a base station intended to be used in a cellular radio network, said base station comprising means for storing the desired power level used by the base station. The base station of the invention is characterized in that when a combiner, antenna cable or type of antenna of the base station is changed in such a manner that the power transmitted by the antenna deviates from the desired power level, the base station comprises means for increasing or decreasing the transmission power until the desired power level is reached again.

In the solution according to the invention, the balance between the transmit and receive service areas of a base station cell remains unchanged in spite of the configuration changes. By the method, it is also possible to compensate for the production tolerances of the transmitter. After the compensation, the transmitter unit produces the set power levels better than before. In addition, the attenuations caused by an untuned antenna and a low-quality antenna cable can be compensated for.

In the following, the invention will be described in more detail with reference to the examples according to the accompanying drawings, in which
Figure 1 illustrates the principal features of a base station,
Figure 2 shows a part of a base station according to the first embodiment of the invention, and
Figure 3 shows a part of a base station according to the second embodiment of the invention.

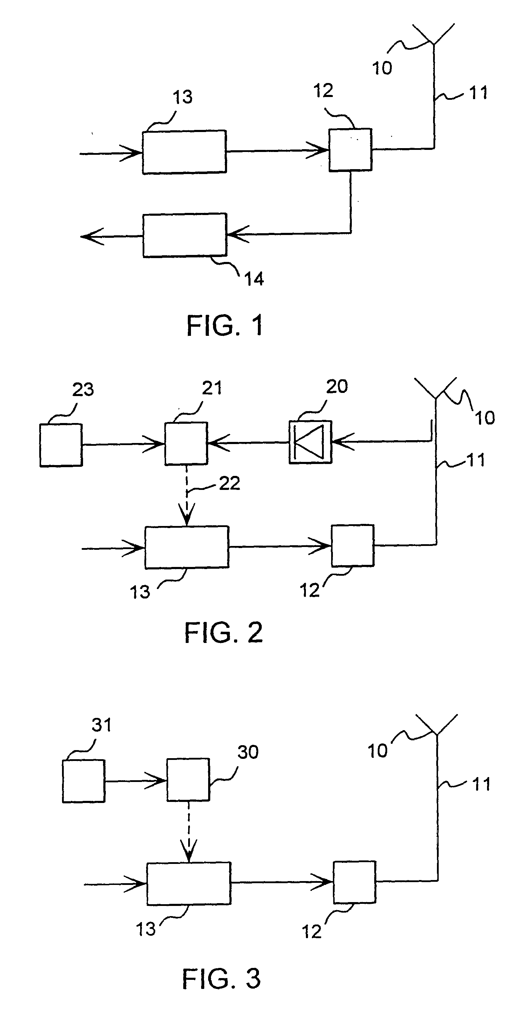

According to Figure 1, a conventional base station comprises a transmitter unit 13, a receiver unit 14, and an RX/TX combiner 12, which connects the above-mentioned units to an antenna. The combiner is connected to the antenna 10 with an antenna cable 11 having a known attenuation.

Figure 2 illustrates the method and equipment according to the preferred embodiment of the invention. The transmission power can be adjusted fully automatically at the base station in response to the measurement of the outgoing power, carried out in the antenna.

The base station of the invention comprises means 20 for measuring the power transmitted by the antenna; means 23 which store the power level selected for the base station in connection with the network planning; and comparing means 21. The measurement of the outgoing power can be carried out with known methods. The power value measured in the antenna is transmitted to the means 21, which compare the measured value with the set value. If the means detect that the measured power level deviates from the desired power level, a power adjustment command 22 is transmitted to the transmitter unit 13. The power transmitted by the antenna thus remains constantly at the desired level regardless of the changes made in the configuration. The method can also be used for compensating for the change in power which occurs gradually with time and which is due to the aging of the transmitter unit. The observation of the power level may be either constant or it may be carried out automatically at desired intervals.

According to the second embodiment of the solution of the invention, the transmission power adjustment can be carried out manually by means of the user interface of the base station. Figure 3 illustrates the base station of the embodiment, this base station comprising means 30 in which the values of the transmission power for different configurations can be stored, and means 31 by which the desired transmission power can be selected from among the stored values.

At the installation stage of the base station, it is possible to store the transmission power values in the base station for different possible configurations. These power levels can be determined by test measurements in the facilities of the manufacturer of the equipment. Once the values have been stored in the base station memory, the transmission power can be easily changed as the configuration changes. By means of the user interface of the base station, it is possible to select the transmission power suitable for the configuration from among the stored values, without it being necessary to carry out new measurements.

It is also possible to carry out the storing of possible transmission power levels and the selection and control of the desired transmission power by means of software as a part of the control software of the base station.

## Claims

1. A method of adjusting transmission power in a base station of a cellular radio network, in each cell of which is determined a desired power level transmitted by the antenna of the base station, **characterized in that** when a combiner, antenna cable or type of antenna of the base station is changed in such a manner that the power transmitted by the antenna deviates from the desired power level, the transmission power of the base station is increased or decreased until the desired power level is reached again.

2. A method according to claim 1, **characterized in that** the adjustment of the transmission power of the base station occurs automatically on the basis of the measurement of the power transmitted by the antenna, said measurement being carried out by the base station.

3. A method according to claim 2, **characterized in that** the measurement and adjustment of the transmission power of the base station are carried out automatically at predetermined intervals.

4. A method according to claim 1, **characterized in that** the transmission power values for different base station configurations are stored in advance in the transmitter unit of the base station, and as the configuration changes, the adjustment of the transmission power is carried out manually by selecting the value from among the values stored in the base station.

5. A base station, intended to be used in a cellular radio network, said base station comprising means (23) for storing the desired power level used by the base station, **characterized in that** when a combiner, antenna cable or type of antenna of the base station is changed in such a manner that the power transmitted by the antenna deviates from the desired power level, the base station comprises means (21) for increasing or decreasing the transmission power until the desired power level is reached again.

6. A base station according to claim 5, **characterized in that** the base station comprises means (20) for measuring the power transmitted by the antenna; means (21) for comparing the measured power with the desired power level; and means (21) for increasing or decreasing the transmission power until the desired power level in the antenna is reached.

7. A base station according to claim 5, **characterized in that** the base station comprises means (30) in which the predetermined values of the transmission power for different configurations are stored, and means (31) for selecting a suitable transmission power level from among the stored transmission power levels as the base station configuration changes.

## Patentansprüche

1. Verfahren zum Anpassen der Sendeleistung in einer Basisstation eines zellularen Funknetzwerks, bei dem in jeder Zelle ein von der Antenne der Basisstation übertragener gewünschter Leistungspegel bestimmt ist,
**dadurch gekennzeichnet, dass**
wenn ein Kombinator, ein Antennenkabel oder eine Antennenart der Basisstation auf eine derartige Weise geändert wird, dass die von der Antenne übertragene Leistung von dem gewünschten Leistungspegel abweicht, die Sendeleistung der Basisstation erhöht oder vermindert wird, bis der gewünschte Leistungspegel wieder erreicht ist.

2. Verfahren nach Anspruch 1,
**dadurch gekennzeichnet, dass**
die Anpassung der Sendeleistung der Basisstation automatisch auf der Grundlage der Messung der von der Antenne gesendeten Leistung erfolgt, wobei die Messung von der Basisstation vorgenommen wird.

3. Verfahren nach Anspruch 2,
**dadurch gekennzeichnet, dass**
die Messung und Anpassung der Sendeleistung der Basisstation automatisch in vorbestimmten Intervallen vorgenommen werden.

4. Verfahren nach Anspruch 1,
**dadurch gekennzeichnet, dass**
die Sendeleistungswerte für verschiedene Basisstationskonfigurationen vorher in der Sendeeinheit der Basisstation gespeichert werden, und mit Änderung der Konfiguration, die Anpassung der Sendeleistung manuell durch Auswahl der Werte aus den in der Basisstation gespeicherten Werten vorgenommen wird.

5. Basisstation, die in einem zellularen Funknetzwerk verwendet werden soll, wobei die Basisstation eine Einrichtung (23) zur Speicherung des von der Basisstation verwendeten gewünschten Leistungspegels aufweist,
**dadurch gekennzeichnet, dass**
wenn ein Kombinator, ein Antennenkabel oder eine Antennenart der Basisstation auf eine derartige Weise geändert werden, dass die von der Antenne übertragene Leistung von dem gewünschten Leistungspegel abweicht, die Basisstation eine Einrichtung (21) aufweist, die die Sendeleistung erhöht oder vermindert, bis der gewünschte Leistungspegel wieder erreicht ist.

6. Basisstation nach Anspruch 5,
**dadurch gekennzeichnet, dass**
die Basisstation eine Einrichtung (20) aufweist zur Messung der von der Antenne gesendeten Leistung; eine Einrichtung (21) zum Vergleichen der gemessenen Leistung mit dem gewünschten Leistungspegel; und eine Einrichtung (21) zum Erhöhen oder Vermindern der Sendeleistung, bis der gewünschte Leistungspegel an der Antenne erreicht ist.

7. Basisstation nach Anspruch 5,
**dadurch gekennzeichnet, dass**
die Basisstation eine Einrichtung (30) aufweist, in der die vorbestimmten Werte der Sendeleistung für verschiedene Konfigurationen gespeichert sind, und eine Einrichtung (31) aufweist, die mit Änderung der Konfiguration der Basisstation einen geeigneten Sendeleistungspegel aus den gespeicherten Sendeleistungspegeln auswählt.

## Revendications

1. Procédé de réglage de la puissance d'émission dans une station de base d'un réseau radio cellulaire, dont le niveau de puissance d'émission souhaité, émis par l'antenne de la station de base dans chaque cellule,
**caractérisé en ce que**, lorsqu'un combinateur, un câble d'antenne ou un type d'antenne de la station de base est changé de sorte que la puissance émise par l'antenne s'écarte du niveau de puissance souhaité, la puissance d'émission de la station de base est augmentée ou diminuée jusqu'à ce que le niveau de puissance souhaité soit à nouveau atteint.

2. Procédé selon la revendication 1,
**caractérisé en ce que** le réglage de la puissance d'émission de la station de base s'effectue automatiquement sur la base de la mesure de la puissance transmise par l'antenne, ladite mesure étant effectuée par la station de base.

3. Procédé selon la revendication 2,
**caractérisé en ce que** la mesure et le réglage de la puissance d'émission de la station de base sont effectués automatiquement à intervalles prédéterminés.

4. Procédé selon la revendication 1,
**caractérisé en ce que** les valeurs de la puissance d'émission pour différentes configurations de la station de base sont stockées préalablement dans l'unité d'émission de la station de base, et lors de changements de configuration, le réglage de la puissance d'émission est effectué manuellement en sélectionnant la valeur parmi les valeurs stockées dans la station de base.

5. Station de base, destinée à être exploitée dans un réseau radio cellulaire, ladite station de base comprenant des moyens (23) de mémorisation du niveau de puissance souhaité exploité par la station de base,
**caractérisée en ce que**, lorsqu'un combinateur, un câble d'antenne ou un type d'antenne de la station de base est changé de sorte que la puissance transmise par l'antenne s'écarte du niveau de puissance souhaité, la station de base comprend des moyens (21) pour augmenter ou diminuer la puissance d'émission jusqu'à ce que le niveau de puissance souhaité soit à nouveau atteint.

6. Station de base selon la revendication 5,
**caractérisée en ce que** la station de base comprend des moyens (20) pour mesurer la puissance transmise par l'antenne, des moyens (21) pour comparer la puissance mesurée au niveau de puissance souhaité et des moyens (21) pour augmenter ou diminuer la puissance d'émission jusqu'à ce que le niveau de puissance souhaité dans l'antenne soit atteint

7. Station de base selon la revendication 5,
**caractérisée en ce que** la station de base comprend des moyens (30) dans lesquels les valeurs prédéterminées de la puissance d'émission pour différentes configurations sont stockées, et des moyens (31) pour sélectionner un niveau de puissance approprié d'émission parmi les niveaux de puissance stockés d'émission lors de changements de configuration de la station de base.
